# EUROPEAN PATENT APPLICATION

(11) **EP 0 663 242 A1**
(43) Date of publication of application: **19.07.1995**
(21) Application number: 94918889.0
(22) Date of filing: 28.06.1994
(51) Int. Cl.: B05B 9/04, A01M 7/00

(54) **SPRAYING DEVICE**

(30) Priority: 29.06.1993 ES 9301797 U; 27.06.1994 ES 9401798 U
(71) Applicant: Atenals, S.L.,, E-03770 Vergel (ES)
(72) Inventor: REIG SOLIVA, Vicente, E-46730 Grao de Gandia (ES); GARCIA FOS, Luis, . (ES)
(74) Representative: Carpintero Lopez, Francisco
(86) International application number: ES9400067
(87) International publication number: WO9501225

(57) **Abstract**

The device is provided to spray essentially liquids for the treatment of plants, but it can also spray solids in powder form and/or in suspension, for other uses, such as lubrication, waxing, etc. The device includes a tank (1) to which is coupled a flexible hose (3) carrying at its free end the spraying nozzle (6), said tank (1) being associated to a compressor (9) to maintain constant the pressure inside the tank, the compressor (9) being actuated by a motor (12) supplied by an electric battery (13), all of which being set in operation through a pressure switch (14) situated in the tank (1); when the pressure switch (14) detects a pressure drop within said tank (1), it starts the motor (12) and consequently the compressor (9) in order to send more pressure to said tank (1), thereby maintaining the product at a constant pressure so as to obtain a uniform spraying. The device may be mounted on wheels to facilitate its transportation, and is characterized in that the tank (1) may be comprised of two parts (21 and 22), coupled to each other, so that between said two parts there may be arranged an elastic membrane (29) determining two sealed compartments (30 and 31), the first one being intended to contain air and the second one containing the product to be spread.

## Description

### OBJECT OF THE INVENTION

The invention relates to device or apparatus for spraying liquids, essentially applicable in treating plantations of every description, based upon the spraying of a liquid, which may be a herbicide, fungicide, insecticide or the like. One of the essential features of the device is the inclusion of a compressor with which pressure is kept constant inside the tank holding the liquid, and hence at the area leading to the outside, the latter comprising a nozzle having at its end a mouthpiece coupled at the end of a very long rubber tube which projects from the tank itself.

The device also allows powder form and/or suspension solids to be sprayed and can also be used as a greaser, oil injector, waxer and so forth, to which end the tank holding the product shall comprise two parts coupled to each other.

### BACKGROUND OF THE INVENTION

Manifold kinds of apparatus and devices are known for spraying liquids designed to treat trees, plants and so forth, there being the so-called "rucksack kind" which comprises a tank with suitable fastening means that the very user carries on his or her back, a tube projecting from the tank ending in a spray nozzle.

In some cases these apparatus can be handled with a lever in which case spraying is not homogeneous for at times a greater pressure will be applied than at other times because the pressure on the lever will not always be the same.

In other cases the device is powered electrically from a battery or cells, and there is no constant pressure within the tank, for as the same is emptied the pressure will logically be diminished and hence spraying will not be the same in all areas.

Furthermore, the tanks are sizeable and therefore very heavy when loaded, which will greatly tire the user out since he or she shall have to carry the device on his or her back.

### DESCRIPTION OF THE INVENTION

The device subject hereof is designed to fully solve the above problems relying upon a simple and effective solution, for one of the key features of the device is the provision of a compressor with its motor supplied from a battery, all of which is housed in a shell to form a single block supported upon the appropriate framework of the device, which framework supports the actual tank holding the liquid, a top handle and wheels to be conveyed backwards and forwards, for the device is not in this case carried upon ones shoulders but shall be hauled from one place to another, albeit with a very long-range for the tube where the mouthpiece having the spray nozzle is very long, thereby allowing the device to be located at a particular position and wide areas around the same to be sprayed, thereafter to be wheeled by pulling elsewhere for a different area to be sprayed.

The compressor is convenient in that the pressure inside the tank holding the liquid to be sprayed is kept constant, which causes the product to be homogeneously distributed, whether onto the ground, trees and so forth.

This pressure is kept constant using a thermostat that is permanently and directly in contact with the actual tank, and therefore when the pressure in the said tank drops slightly, the thermostat works to make the motor supply circuit and start the compressor in order to send more pressure to the actual tank.

The energy used up in its operation, holding pressure constant, driving its motor through the pressure switch, intermittently making and disconnecting the electric circuit, is negligible. Logically, when the pressure drops, the pressure switch will connect the electric circuit, but in no time a suitable pressure shall be achieved within the tank.

The device can also send out and spray powder form and/or suspension solids, the tank being to such end provided to be split into two impervious compartments, one holding the liquid or product as such and another holding the air to be mixed with the above.

In this embodiment of the device, the tank is defined by two parts coupled to each other in such a way that in coupling these two parts a resilient membrane can be provided dividing the deposit as such into two impervious compartments, one holding the liquid as aforesaid and another holding air, and hence both compartments shall be fitted with the respective safety valves and one of them, in particular the top or liquid holding tank will have an outlet for the flexible pipe carrying the spray nozzle to be coupled, the bottom of the tank or lower compartment having an inlet for air and the top compartment or the lower compartment having air outlets or valves, the lower part of the two parts making up the tank in this second embodiment being moreover provided to have an extension below its bottom into a downwardly open cylindrical sector in which the compressor and the motor can be mounted, and wherein a general on/off power switch has been provided as well as a battery charger.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

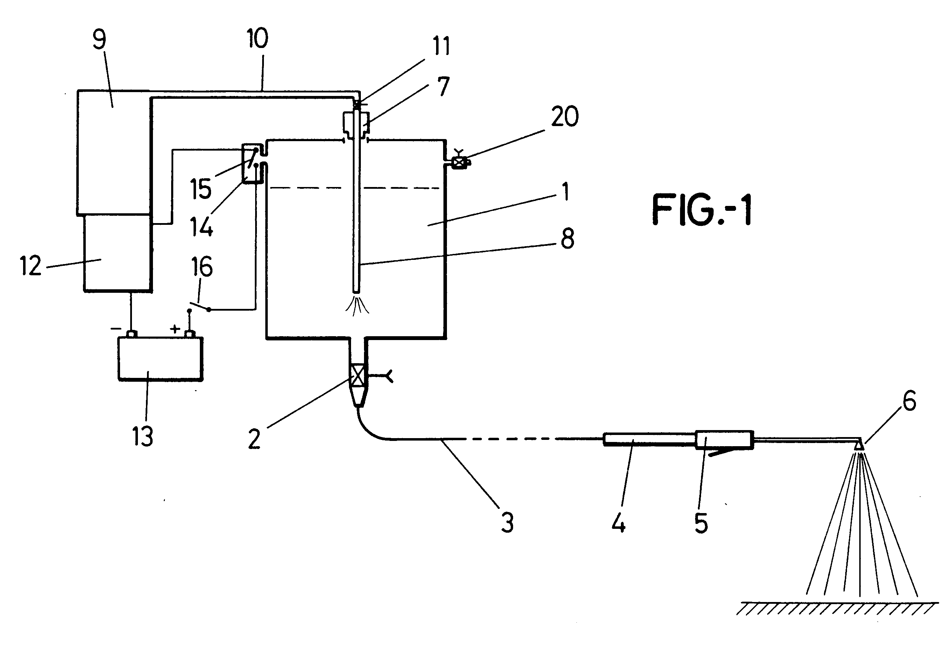

Figure 1.- Is a schematic view of the liquid spray device made in accordance with the object of this invention.
Figure 2.- Is a preferred embodiment of the device of the invention, in particular a general perspective view thereof, when at rest.
Figure 3.- Is a representation similar to the above where the tank comprises two parts coupled to each other.
Figure 4.- Is a close-view of the two parts of the tank shown in the previous figure, when coupled to each other with a membrane in between.
Figure 5.- Finally shows the two parts shown in the previous figure without the middle membrane.

### PREFERRED EMBODIMENT OF THE INVENTION

The aforesaid figures show that the liquid spray device subject of this invention for treating certain plantations comprises a tank (1) holding the liquid to be applied, with a flexible tube or rubber pipe (3) projecting from the same through an outlet valve or tap (2), extending into a mouthpiece (4) having a hand-operated opening and closing control (5) and ending in a spray nozzle (6), whereas the top of the tank (1) has a load mouth at which a stopper (7) is coupled through which a vertical arm (8) passes which is housed inside the very tank (1), constituting a stirrer for the liquid product held therein, air being provided to be supplied through such arm (8), which is tubular, into the tank through a compressor (9) which is in contact with the stirrer (8) through the duct (10), a valve (11) being provided to control the inlet of air from the compressor (9), the latter being driven by a motor (12) supplied from a battery (13).

A pressure switch (14) is provided to be in permanent contact with the tank (1) and when the pressure drops inside the tank (1) the pressure switch makes the relevant contact (15) and starts the motor (12), starting the compressor (9) to send air into the tank (1), rapidly increasing the pressure therein. A general switch (16) has been provided between the pressure switch (14) and the battery (13).

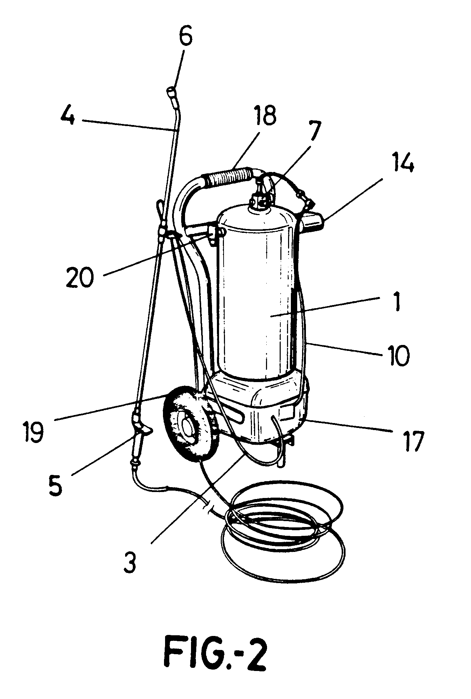

The device, in a preferred embodiment shown in figure 2, is particular in that the unit formed by the compressor (9), motor (12) and battery (13) is housed in a common shell (17) from which the aforesaid duct (10), flexible tube (3) from the very tank (1) and the respective lead wires project, being particular in that the said shell (17) is housed in a lower support of a general framework in which the respective grip (18) is conformed, which framework is provided on its underside with wheels (19) for the device as a whole to be hauled.

In accordance with the elements and features of the device, the stirrer (8) is designed to stir the liquid mixture held in the tank (1), improving its homogeneity. Furthermore, the valve (11) ia provided to prevent air from coming in from the compressor, whereas the pressure switch (14), constituting a pressure meter, for instance, through a membrane or other conventional device, being in constant contact with the tank (1), will permanently supply the said internal pressure, switching the electric circuit for the motor (12) on and off, depending upon whether there is a rise or drop in pressure.

The device and in particular the tank (1) is completed with an air emptying or bleed valve (20).

In a different embodiment, the tank (1) is defined by two parts (21) and (22) coupled to each other by means of flanges or yokes (23) provided at the respective facing mouths to couple the said two parts (21) and (22), with the same wheels (19) and supporting legs (23), the flexible tube (3), the mouthpiece (4) and the spray or outlet nozzle (6), and the aforesaid device, such as outlet valve (2), grip (18) and load mouth and stopper (7). In this embodiment, though not shown, the compressor (9), motor (12), supply batteries (13), pressure switch (14) and so on will also be provided.

The lower part (22) of the two constituting the general tank (1) in this second embodiment, has a bottom (24) from which it extends into a cylindrical and open sector (25) in which a general on/off switch (26) is provided, as well as a battery charger (27), an air inlet being provided in the said bottom (28).

The said general tank (1) comprising the parts (21) and (22) can include an elastic membrane (29), which will be held between the two coupling flanges or yokes (23) in such a way that the membrane (29) will divide the tank formed by parts (21) and (22) into two impervious compartments, the top compartment defined between the membrane (22) and the part (21) to hold the liquid, whereas the lower compartment defined between the membrane (29), the bottom (24) and the side walls of the inner part (22), to make up a second air holding compartment, designed to be mixed with the liquid contained in the top compartment, these lower and upper compartments being respectively numbered (30) and (31).

The lower compartment (30) shall have a safety valve (32) and an air outlet or bleed valve (33), whereas the upper compartment (31) shall have an outlet (34) having the corresponding valve in which the flexible tube (3) will be housed, likewise having a safety valve or manometer (35).

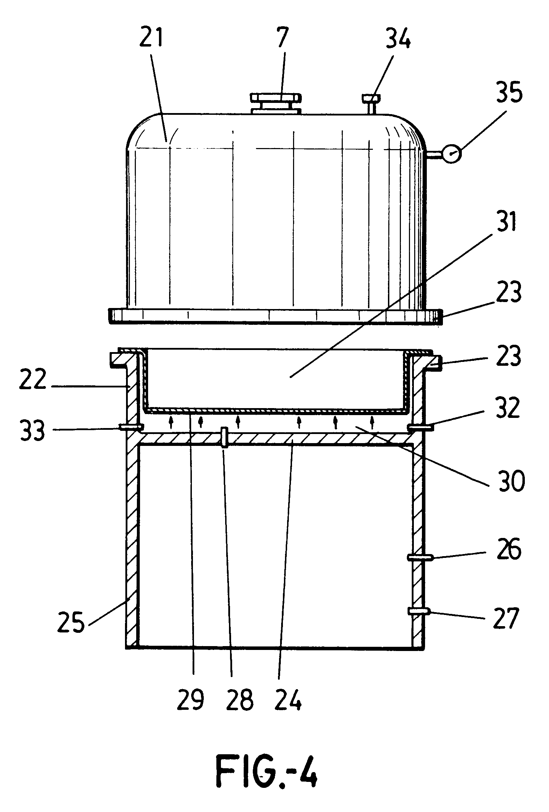

Where there is no such membrane (29) the tank defines a single compartment (31) the bottom (24) of which shall have the aforesaid air inlet (28) in which case the air outlet or bleed valve (33) will be located on the top part, whereas the outlet (34) with the valve to couple the flexible tube (3) will be located on a side of the lower part, as shown in figure 4, the top part (21) moreover having the safety valve and manometer (35) described in regard to figure 4.

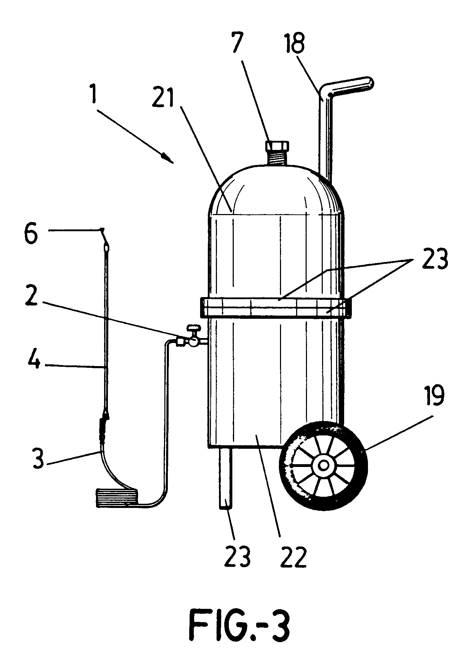

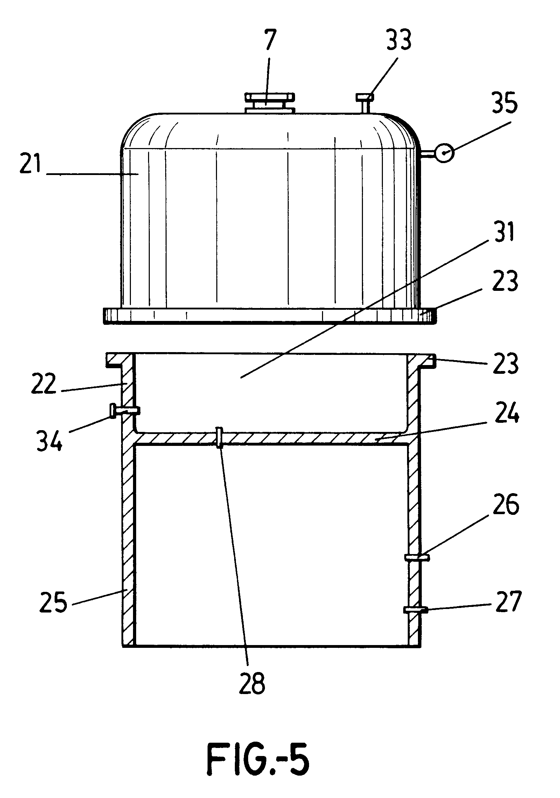

The tank in this embodiment shown in figures 3, 4 and 5 can be made with two parts as above-mentioned, and of plastic, which is very difficult when the said tank comprises a single part.

## Claims

1. A spray device, being of the kind comprised by a tank (1) holding the mixture of product to be applied, from which a flexible tube (3) projects ending in a spray mouth (6) and powered electrically, essentially characterised in having a compressor (9) with its corresponding drive motor (12) being activated by a pressure switch (14) in permanent contact with the inside of the tank (1), such pressure switch (14) being electrically connected to the corresponding battery (13) which supplies the motor (12), and the compressor (9) being connected to the tank (1) through a hollow arm which crosses through the corresponding stopper and is housed in a vertical sector (8) inside the actual tank, having an air outlet (11) through such arm and stopper (7), the said vertical arm (8) defining means for stirring the mixture or liquid contained in the tank (1).

2. A spray device, as in claim 1, characterised in that the unit comprised by the battery (13), compressor (9) and drive motor (12) is mounted upon a common framework (17) defining a block duly positioned on the lower part of the general framework supporting the actual tank (1), which framework is shaped at the top as a grip (18) whereas its underside has a pair of wheels (19) for the device to be pulled backwards and forwards.

3. A spray device, as in the above claims, characterised in that the flexible tube (3) projecting from the tank (1) holding the liquid and ending in the spray mouth (6) comprises a very long pipe at the start of which an outlet tap is provided as a safety valve (2) whereas its free end is coupled with the corresponding mouthpiece (4), having a manually driven opening and closing control (5).

4. A spray device, as in claim 1, characterised in that the duct leading from the compressor into the tank (1) has an air inlet valve (11) whereas the tank as such has an air bleed valve (20).

5. A spray device, as in the above claims, characterised in that the tank (1) comprises two parts (21) and (22) coupled to each other, through flanges (23) provided at their facing mouths, the lower part (22) having a middle bottom (24) from which a cylindrical sector (25) opens towards the lower part, the latter having a general on/off switch (26) and a battery charger (27) whereas the said bottom (24) has an air inlet (28), the top part (21) having the corresponding stopper (7) for loading purposes and for the duct from the compressor (9) to pass.

6. A spray device, as in claim 5, characterised in that at the coupling between both parts (21) and (22) of the tank (1) a resilient membrane (29) is fixed to define two impervious compartments (30) and (31), the lower compartment being designed to hold air and the upper compartment being designed to hold the product that is to be mixed with such air.

7. A spray device, as in claim 6, characterised in that the lower compartment (30) defined between the bottom (24) of the lower part (22) and the actual membrane (29), includes an air outlet or bleed valve (24) and a safety valve (32) whereas the top part (21) in which the compartment (31) is established with the membrane (29) includes the corresponding outlet mouth with valve (34) for the coupling of the flexible tube carrying the spray nozzle and a safety valve and manometer (35).

8. A spray device, as in claim 5, characterised in that the two parts (21) and (22) defining the tank (1) define a single compartment (22) with the respective valve outlet (34) to couple the flexible tube carrying the spray nozzle, and the corresponding air outlet or bleed valve (33) and a safety valve and manometer (35).
